# FASCICULE DE BREVET EUROPEEN

(11) **EP 0 582 645 B1**
(45) Date de publication et mention de la délivrance du brevet: **14.12.1994**
(21) Numéro de dépôt: 92910985.8
(22) Date de dépôt: 04.05.1992
(51) Int. Cl.: G01J 5/00

(54) **PROCEDE ET DISPOSITIF D'ETALONNAGE D'UN PYROMETRE OPTIQUE ET PLAQUETTES ETALONS CORRESPONDANTES**
VERFAHREN UND ANORDNUNG ZUM EICHEN EINES OPTISCHEN PYROMETERS UND STANDARDPLÄTTCHEN DAFÜR
METHOD AND DEVICE FOR CALIBRATING AN OPTICAL PYROMETER, AND ASSOCIATED REFERENCE WAFERS

(30) Priorité: 02.05.1991 LU 87933
(43) Date de publication de la demande: 16.02.1994
(73) Titulaire: COMMUNAUTE ECONOMIQUE EUROPEENNE (CEE), L-2920 Luxembourg (LU)
(72) Inventeur: DILHAC, Jean-Marie, F-31000 Toulouse (FR); GANIBAL, Christian, F-31650 Saint-Orens (FR); ROUSSET, Bernard, F-31200 Toulouse (FR)
(74) Mandataire: Barre, Philippe
(86) Numéro de dépôt international: FR9200406
(87) Numéro de publication internationale: WO9219943

(56) Documents cités:
- FR-A- 2 593 284
- US-A- 4 969 748

## Description

La présente invention concerne un procédé et un dispositif d'étalonnage d'un pyromètre optique, et des plaquettes étalons correspondantes. Une des applications de la présente inventicn vise en particulier l'étalonnage de pyromètres associés à des fours de traitement thermique rapide de plaquettes semi-conductrices en silicium, germanium, arséniure de gallium, etc...

Il est habituel, notamment dans l'application précitée, de mesurer la température régnant à l'intérieur d'un four à l'aide d'un pyromètre optique. Un tel instrument permet de déterminer la température d'un corps (plaquettes à traiter) en analysant le rayonnement émis par celui-ci sans aucun contact physique avec le corps lui-même.

Cependant un pyromètre est sujet à des dérèglements et/ou dérives notamment en fonction du nombre de mesures effectuées. Jusqu'à présent, pour réétalonner un tel pyromètre, on fixait un thermocouple de référence sur la face supérieure d'une plaquette placée dans un four et on réétalonnait le pyromètre de sorte que les indications données par le thermocouple et celles données par le pyromètre coïncident. Un tel procédé et un dispositif d'étalonnage sont divulgués par le document US-A- 4 969 748.

Un tel mode d'étalonnage présente de nombreux inconvénients dont le plus important est qu'il nécessite l'installation d'un thermocouple dans le four, avec ses liaisons électriques avec les moyens de traitement des signaux. Dans la plupart des applications, il est impératif que les objets traités (plaquettes) le soient en l'absence de toute pollution et donc de toute manutention. Or, l'introduction du thermocouple dans le four de traitement et le passage des liaisons électriques sont des facteurs de pollution. En outre, les fils du thermocouple doivent être soudés sur la plaquette par des soudures qui sont réalisées en un matériau différent de celui de la plaquette. De ce fait, l'indication de température donnée par le thermocouple est entachée d'une erreur inhérente à la nature et à la forme des soudures. Cette erreur difficilement prévisible ne peut être corrigée de façon reproductible.

L'objectif de la présente invention est de pallier l'ensemble de ces inconvénients en fournissant un procédé et un dispositif d'étalonnage d'un pyromètre optique ne nécessitant pas l'introduction de corps étrangers dans le four et permettant l'étalonnage in situ du pyromètre.

A cet effet, le procédé conforme à l'invention pour étalonner un pyromètre optique consiste à :
a) placer dans un four une plaquette munie d'une zone étalon sur au moins une partie de l'une de ces faces, dite face active, la zone étalon présentant une discontinuité de réflexion des ondes électromagnétiques à une température connue,
b) émettre une onde électromagnétique en direction de la zone étalon,
c) mesurer et enregistrer l'intensité de l'onde réfléchie par la zone étalon,
d) mesurer et enregistrer la température de la zone étalon, à l'aide du pyromètre optique à étalonner,
e) monter le four en température,
f) déterminer l'instant où une discontinuité de réflexion de l'onde électromagnétique est observée,
g) repérer la valeur de température mesurée par le pyromètre à cet instant,
h) comparer cette valeur de température mesurée avec la valeur de température connue,
i) faire coïncider la valeur de température mesurée par le pyromètre et la valeur de température connue.

Ainsi, en émettant une onde électromagnétique, et notamment une onde laser, vers la zone étalon de la plaquette, on crée un rayonnement réfléchi par cette zone étalon. La mesure et l'enregistrement de l'intensité de ce rayonnement réfléchi permettent de suivre l'évolution du coefficient de réflexion de la zone étalon pendant la durée de la montée en température du four. Simultanément, le pyromètre à étalonner mesure la température de la zone étalon. La détermination de l'instant où apparaît une discontinuité de réflexion, permet de repérer la valeur de la température mesurée par le pyromètre à cet instant. Par comparaison de cette valeur de température mesurée et de la valeur de température connue correspondant à la discontinuité observée, on détermine la correction à apporter au pyromètre à étalonner.

On réalise ainsi un étalonnage, in situ, du pyromètre optique associé à un four déterminé, sans introduction de corps étranger dans le four.

Dans un mode de mise en oeuvre préféré du procédé, l'on utilise une plaquette dont la zone étalon est constituée d'un matériau actif présentant une discontinuité de réflexion à son passage de l'état solide à l'état liquide. De préférence, la température connue est le point de fusion de ce matériau actif.

De préférence et pour affiner la mesure de l'intensité du rayonnement réfléchi, un filtrage chromatique est effectué préalablement à cette mesure pour en éliminer toute onde électromagnétique parasite (en provenance des éléments chauffants du four par exemple).

La présente invention concerne également un dispositif d'étalonnage d'un pyromètre optique associé à un four en vue de délivrer un signal électrique de température, caractérisé en ce qu'il comprend :
- une plaquette munie d'une zone étalon présentant une discontinuité de réflexion des ondes électromagnétiques à une température connue et adaptée pour être logée dans le four de sorte que sa zone étalon soit sur l'axe de visée du pyromètre à étalonner,
- un émetteur d'ondes électromagnétiques adapté pour émettre une onde électromagnétique en direction de la zone étalon de la plaquette,
- un capteur d'ondes électromagnétiques agencé pour recevoir le rayonnement réfléchi par la zone étalon et adapté pour délivrer un signal électrique proportionnel à l'intensité de ce rayonnement,
- des moyens de traitement de signaux, agencés pour recevoir les signaux électriques en provenance du capteur et du pyromètre à étalonner et adaptés pour détecter l'instant d'apparition d'une discontinuité dans le signal issu du capteur et pour délivrer un signal dit de température d'étalonnage, représentatif du signal de température issu du pyromètre à cet instant,
- des moyens de comparaison du signal de température d'étalonnage et d'un signal de consigne représentatif de la température connue correspondant à la discontinuité de réflexion précitée, adaptés pour délivrer un signal de correction représentatif de la différence entre ces signaux,
- et des moyens de correction du pyromètre agencés pour recevoir le signal de correction et adaptés pour appliquer ce signal à des moyens d'étalonnage du pyromètre afin de faire coïncider les valeurs de température d'étalonnage et connue.

Grâce à ces dispositions, d'une part le capteur envoie un signal électrique aux moyens de traitement des signaux, ce qui permet de suivre l'évolution du coefficient de réflexion de la zone étalon, et d'autre part et simultanément, le pyromètre à étalonner permet de suivre l'évolution de la température de la zone étalon et d'envoyer vers les moyens de traitement des signaux la valeur de la température qu'il mesure. Lorsque les moyens de traitement des signaux détectent une discontinuité de réflexion, la valeur de température dite d'étalonnage, mesurée à cet instant par le pyromètre, est repérée. Les moyens de comparaison, constitués par exemple de mémoires électroniques, comparent la valeur de température d'étalonnage à une valeur de température connue, puis déterminent la correction à apporter au pyromètre pour faire coïncider ces deux valeurs.

Un étalonnage du pyromètre est ainsi réalisé, in situ, de façon automatique et sans apport de corps étranger dans le four.

Selon un mode préféré de réalisation, la valeur de température connue est la température de fusion d'un matériau actif de la zone étalon.

La présente invention concerne également une plaquette étalon pour l'étalonnage d'un pyromètre optique, caractérisée en ce qu'elle présente une face active, une face inactive et une épaisseur telle que les faces active et inactive soient sensiblement isothermes, et en ce qu'elle comporte sur une partie au moins de sa face active, une zone étalon ayant une couche de matériau actif présentant une discontinuité de réflexion à son point de fusion.

Grâce à une telle disposition, lorsque le matériau actif de la zone étalon est à son point de fusion, une discontinuité de réflexion est observée. Comme la température de fusion est connue de manière très précise, la discontinuité de réflexion observée permet de déterminer avec précision le moment où cette température connue est atteinte. Il est ainsi possible d'étalonner un pyromètre optique associé à cette plaquette.

Dans un premier mode de réalisation, la zone étalon recouvre la totalité de la surface active de la plaquette.

Dans un second mode de réalisation, la zone étalon ne recouvre qu'une partie de la surface active, dont le reste de la surface est destinée à recevoir un traitement usuel.

De préférence, le matériau actif est un corps pur cristallin et la plaquette est constituée d'une pluralité de couches minces de matériaux.

De tels procédé, dispositif et plaquette étalon permettent d'étalonner in situ (dans un four) un appareil de mesure de température et ceci sans faire pénétrer de corps étrangers dans le four.

D'autres objets, caractéristiques et avantages de la présente invention ressortiront de la description qui va suivre, à titre d'exemple, en référence aux dessins ci-annexés, dans lesquels :
- la figure 1 est une vue schématique partiellement en perspective montrant le dispositif selon l'invention,
- la figure 2 est une vue schématique en coupe et à échelle dilatée d'une plaquette selon l'invention et d'un pyromètre associé.

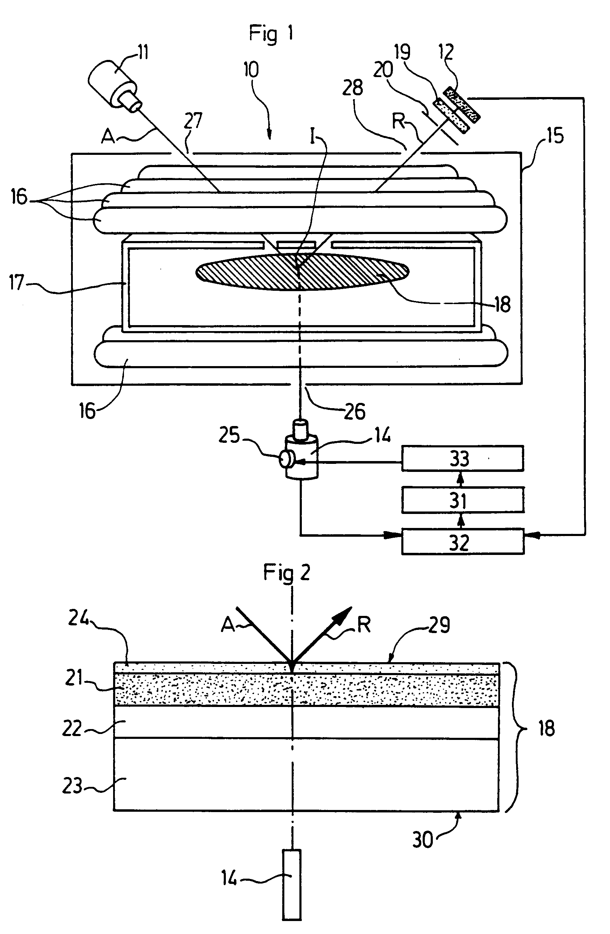

Selon la forme de réalisation décrite et représentée aux figures 1 et 2, le dispositif d'étalonnage 10 selon l'invention comporte un émetteur d'ondes électromagnétiques 11, un capteur 12, des moyens de traitement des signaux 32, des moyens de comparaison 31, des moyens de correction 33 et une plaquette étalon 18. Ce dispositif permet d'étalonner un pyromètre 14 associé à un four 15 contenant une pluralité d'éléments chauffants 16 répartis de part et d'autre d'une cellule en quartz 17.

Le four 15, est refermé par une porte (non représentée) donnant accès à la cellule 17 et permettant la mise en place dans celle-ci d'un élément à traiter 18 appelé plaquette.

Cette plaquette 18 repose par sa face inférieure dite inactive, sur des supports ponctuels (non représentés). Sa face supérieure, dite active, est en l'exemple entièrement constituée par une zone étalon comportant un matériau actif. Ce matériau actif présente une discontinuité de réflexion à son point de fusion. (Cette plaquette sera décrite en détail plus loin).

L'émetteur d'ondes électromagnétiques 11 est généralement un dispositif à laser (par exemple du type commercialisé sous le nom de "Spectra Physics 155").

Le capteur optique 12 associé à ce type d'émetteur est, par exemple, une photodiode (du type commercialisé sous le nom "OCLY 110C"). Ce capteur optique est muni d'un filtre chromatique 19 (par exemple un filtre optique commercialisé sous le nom "ORIEL" à bande passante de 1 nm centrée sur 0,6328 µm, et d'un diaphragme 20. Le capteur optique est relié aux moyens de traitement des signaux 32 auxquels il délivre un signal électrique proportionnel à l'intensité du rayonnement qu'il reçoit.

Le pyromètre 14 est muni d'un ensemble d'étalonnage, ici un potentiomètre de réglage 25. Un tel pyromètre optique est du type commercialisé sous la dénomination "IRCON", ou analogue. Ce pyromètre est placé en dehors du four 15 en face d'une ouverture 26 pratiquée dans ce four et vise la face inactive de la plaquette. Le pyromètre est relié aux moyens de traitement des signaux 32 auxquels il délivre un signal proportionnel à la température du corps qu'il vise.

Des ouvertures 27 et 28 sont également pratiquées dans le four (sans toutefois nuire à la bonne isolation de ce four) pour le passage d'un rayon incident A et d'un rayon réfléchi R.

Les moyens de traitement des signaux 32 sont reliés au capteur et au pyromètre et sont constitués par un ensemble de mémoires électroniques.

Les moyens de comparaison 31 sont reliés au moyen de traitement des signaux 32 et sont constitués par une unité centrale de calcul.

Enfin les moyens de correction 33 sont reliés aux moyens de comparaison 31 et délivrent un signal de commande à l'ensemble d'étalonnage 25.

Le dispositif selon l'invention fonctionne de la manière ci-après décrite.

Un faisceau laser incident A est émis par l'émetteur 11 en direction de la plaquette 18, et plus exactement en direction de la zone étalon de cette plaquette. Le faisceau incident A passe ainsi par l'ouverture 27 du four puis contacte la plaquette 18 en une zone I. Un faisceau réfléchi R est renvoyé et, après passage par l'ouverture 28 du four, est capté à travers le filtre 19 par le capteur 12. Ce capteur délivre aux moyens de traitement des signaux 32 un signal électrique proportionnel à l'intensité de la lumière qu'il a captée. Ce signal est donc fonction du coefficient de réflexion de la zone étalon.

Simultanément, le pyromètre à étalonner 14 mesure la température de la plaquette 18 en visant la face inactive de la plaquette 18 en dessous de la zone I. Comme cela sera expliqué plus loin, la température de la plaquette 18 sur sa face active et sur sa face inactive est sensiblement identique.

Lorsque la porte du four 15 est refermée, les éléments chauffants 16 sont mis en fonctionnement et la température à l'intérieur de la cellule augmente. Lorsque la température dans la cellule est telle qu'elle provoque la fusion de la couche active de la plaquette 18, l'intensité réfléchie par la zone étalon I change de manière importante et instantanée. Les moyens de traitement des signaux repèrent alors la température mesurée, dite température d'étalonnage, par le pyromètre au moment où la discontinuité de réflexion a été observée.

Les moyens de comparaison 31 comparent la valeur de température d'étalonnage et le signal de consigne représentatif de la température connue (t_{c}) correspondant au point de fusion du matériau actif. De cette comparaison il ressort un signal de correction représentatif de la différence entre ces signaux. Ce signal de correction est délivré aux moyens de correction 33 qui envoient un signal de commande à l'ensemble d'étalonnage 25 du pyromètre. Ainsi la valeur de température d'étalonnage correspond maintenant à la température de fusion connue (t_{c}).

Le pyromètre est alors correctement étalonné.

Il est à noter que le dispositif ci-dessus décrit peut être muni d'émetteur, capteur, etc... autres que ceux dont les noms commerciaux sont indiqués. Ces dénominations n'ont été données qu'à titre d'information, pour la clarté de la présente description.

Il est à noter que le dispositif laser employé peut être un laser continu ou un laser pulsé associé à une détection synchrone.

Lorsque l'on utilise un laser continu, le capteur 11 associé est muni d'un diaphragme 20 pour éliminer les ondes électromagnétiques parasites.

En variante, il est possible de remplacer les moyens de traitement des signaux 32, de comparaison 31 et de correction 33 par une table traçante et un utilisateur. Dans ce cas, les moyens de traitement des signaux sont constitués par la table traçante. Cette table imprime les courbes de l'intensité du rayonnement réfléchi en fonction du temps et de la température en fonction du temps. L'utilisateur se substitue aux moyens de comparaison 31 et de correction 33. Lorsque la courbe de l'intensité du rayonnement réfléchi montre une brusque variation, l'instant où cette variation est observée est repéré. L'utilisateur lit alors sur la courbe de température mesurée, la valeur de la température d'étalonnage mesurée à cet instant là. L'utilisateur compare cette valeur de température d'étalonnage à celle connue (t_{c}) correspondant à la température de fusion du matériau actif de la zone étalon. Il détermine ainsi la différence entre la température d'étalonnage et la température connue. Il agit alors sur le potentiomètre d'étalonnage 25 pour ramener cette différence à zéro.

Le pyromètre est alors correctement étalonné.

Comme cela a été précédemment indiqué, la plaquette 18 est munie d'une zone étalon. De préférence, cette plaquette est constituée comme ci-après décrit.

La plaquette 18 présente la forme générale d'un disque. Elle est constituée d'une pluralité de matériaux déposés sous forme de couches minces et comporte une face active 29 et une face inactive 30. De la face active vers la face inactive on trouve respectivement une couche de protection 24, une couche active 21, une couche de séparation 22 et une couche de support 23.

La couche de protection 24 peut éventuellement être omise. La température de fusion de cette couche de protection est supérieure à la température de fusion de la couche active.

La couche active 21 est constituée d'un corps pur cristallin présentant une discontinuité de réflexion à sa température de fusion. La couche de séparation est destinée à empêcher le mélange de la couche active et de la couche de support lorsque la couche active est en fusion. Cette couche de séparation présente une bonne conductivité thermique.

Il est très important que la température de fusion de la couche active soit inférieure aux températures de fusion des couches qui l'entourent (c'est-à-dire des couches de séparation et de protection, et de la couche de support). Pour ce faire, la couche de protection 24 est à base de nitrure de silicium (Si₃N₄) généralement déposée chimiquement en phase vapeur, la couche active est à base de germanium (Ge), la couche de séparation est à base d'oxyde de silicium (SiO₂) et la couche de support est à base de silicium (Si).

Les matériaux ci-dessus énoncés ne sont que des exemples de réalisation. Bien d'autres matériaux peuvent être utilisés dans la mesure où ils satisfont aux conditions imposées et rappelées ci-dessus.

Le fait que la couche active 21 soit constituée d'un corps pur cristallin implique que sa température de fusion est connue avec une très grande précision. De ce fait, l'étalonnage du pyromètre peut être effectué à ec une précision de l'ordre ou inférieure au degré.

Il est à noter que la couche de protection 24 peut être omise. Dans ce cas, on s'expose cependant à ce que le matériau actif en fusion vienne se déposer sur la cellule de quartz 17 du four 15. Pour certaines applications on peut concevoir qu'un tel dépôt ne soit pas un handicap.

Il est à souligner que grâce à la réalisation de la plaquette sous forme de couches minces de matériaux, celle-ci présente une très faible épaisseur.

De préférence sur une couche très mince de silicium de l'ordre de 250 µm, la couche de séparation en oxyde de silicium fait 500 nm (5000 Å) d'épaisseur, la couche active de germanium présente également une épaisseur de 500 nm (5000 Å) et la couche de protection de nitrure de silicium fait environ 100 nm (1000 Å). L'épaisseur totale de la plaquette est donc de l'ordre de 250 µm et peut être moindre.

Etant donné la bonne conductivité thermique de l'ensemble des matériaux constituant la plaquette et leur dépôt sous forme de couches minces, on obtient une plaquette en équilibre thermique dans la direction verticale. On peut ainsi considérer que la zone d'impact du faisceau laser sur la face active de la plaquette et la zone de visée du pyromètre située sur la face inactive en dessous de la zone d'impact du faisceau laser constituent deux surfaces sensiblement isothermes.

Une telle plaquette dont la face active est entièrement constituée d'une zone étalon est destinée à être placée régulièrement dans le four à l'aide du robot qui introduit les plaquettes dans ce four. Ceci afin d'étalonner le pyromètre associé à ce four. Une même plaquette peut être réutilisée une dizaine de fois au moins.

Il est donc facile de prévoir un cycle automatique d'étalonnage toutes les n plaquettes.

En variante, la plaquette est munie, sur sa face active, d'une zone étalon n'occupant qu'une partie de sa face. Dans ce cas, le reste de la face active est libre pour recevoir tout traitement approprié. L'intérêt d'une telle plaquette est qu'un étalonnage du pyromètre peut être effectué sur chaque plaquette ou sur quelques unes d'entre elles sans avoir à placer dans le four de plaquette spéciale. En effet, c'est la plaquette classique à traiter qui présente sur sa face active mais en dehors de la zone de traitement une zone étalon.

Quel que soit le type de plaquette utilisé, il est à noter qu'aucun corps étranger n'est introduit dans le four lors de l'étalonnage du pyromètre. Aucune pollution (poussières) n'est ainsi introduite. En outre, la mesure de la température de référence, effectuée par détection d'une discontinuité de réflexion, ne nécessite aucun contact (soudure) avec la plaquette.

Bien entendu, la présente invention n'est pas limitée aux différents modes de réalisation décrits. Ainsi, la forme et les dimensions de la plaquette étalon peuvent être autres. Le faisceau d'onde électromagnétique utilisé peut être de toute sorte. Le matériau actif n'est pas obligatoirement du germanium. De même, le four associé au pyromètre peut très bien ne pas être un four de traitement thermique rapide, mais tout simplement un four classique.

## Revendications

1. Procédé d'étalonnage d'un pyromètre optique, caractérisé en ce qu'il consiste à :
a) placer dans un four une plaquette munie d'une zone étalon sur au moins une partie de l'une de ces faces, dite face active, la zone étalon présentant une discontinuité de réflexion des ondes électromagnétiques à une température connue,
b) émettre une onde électromagnétique en direction de la zone étalon,
c) mesurer et enregistrer l'intensité de l'onde réfléchie par la zone étalon,
d) mesurer et enregistrer la température de la zone étalon, à l'aide du pyromètre optique à étalonner,
e) monter le four en température,
f) déterminer l'instant où une discontinuité de réflexion de l'onde électromagnétique est observée,
g) repérer la valeur de température mesurée par le pyromètre à cet instant,
h) comparer cette valeur de température mesurée avec la valeur de température connue,
i) faire coïncider la valeur de température mesurée par le pyromètre et la valeur de température connue.

2. Procédé selon la revendication 1, caractérisé en ce que l'on utilise une plaquette dont la zone étalon est constituée d'un matériau actif présentant une discontinuité de réflexion à son passage de l'état solide à l'état liquide, et en ce que la valeur de température connue est le point de fusion de ce matériau actif.

3. Procédé selon la revendication 1 ou 2, caractérisé en ce que l'on effectue un filtrage chromatique de l'onde électromagnétique réfléchie avant de mesurer son intensité afin d'éliminer les ondes électromagnétiques parasites ne provenant pas de la réflexion de l'onde électromagnétique émise vers la zone étalon.

4. Procédé selon l'une des revendications précédentes, caractérisé en ce que l'on place le pyromètre optique à étalonner de sorte qu'il vise la face opposée à la face active de la plaquette en une zone située directement sous la zone étalon.

5. Procédé selon l'une des revendications précédentes, caractérisé en ce que l'on utilise une plaquette dont la zone étalon recouvre entièrement la face active.

6. Procédé selon l'une des revendications 1 à 4, caractérisé en ce que l'on utilise une plaquette dont la zone étalon occupe une partie uniquement de la face active.

7. Dispositif d'étalonnage d'un pyromètre optique associé à un four en vue de délivrer un signal électrique de température, caractérisé en ce qu'il comprend :
- une plaquette (18) munie d'une zone étalon présentant une discontinuité de réflexion des ondes électromagnétiques à une température connue (t_{c}) et adaptée pour être logée dans le four de sorte que sa zone étalon soit dans l'axe de visée du pyromètre à étalonner,
- un émetteur (11) d'ondes électromagnétiques adapté pour émettre une onde électromagnétique en direction de la zone étalon de la plaquette,
- un capteur (12) d'ondes électromagnétiques agencé pour recevoir le rayonnement réfléchi par la zone étalon et adapté pour délivrer un signal électrique proportionnel à l'intensité de ce rayonnement,
- des moyens de traitement de signaux, agencés pour recevoir les signaux électriques en provenance du capteur (12) et du pyromètre à étalonner (14) et adaptés pour détecter l'instant d'apparition d'une discontinuité dans le signal issu du capteur et pour délivrer un signal dit de température d'étalonnage, représentatif du signal de température issu du pyromètre à cet instant,
- des moyens de comparaison (31) du signal de température d'étalonnage et d'un signal de consigne représentatif de la température connue (t_{c}) correspondant à la discontinuité de réflexion précitée, adaptés pour délivrer un signal de correction représentatif de la différence entre ces signaux,
- et des moyens de correction du pyromètre agencés pour recevoir le signal de correction et adaptés pour appliquer ce signal à des moyens d'étalonnage du pyromètre afin de faire coïncider les valeurs de température d'étalonnage et connue (t_{c}).

8. Dispositif selon la revendication 7, caractérisé en ce que le pyromètre à étalonner (14) est disposé en regard de la face de la plaquette opposée à celle comportant la zone étalon, de façon à viser une zone placée au-dessous de ladite zone étalon.

9. Dispositif selon la revendication 7 ou 8, caractérisé en ce que la plaquette comporte une zone étalon constituée en un matériau actif présentant une discontinuité de réflexion à son passage de l'état solide à l'état liquide et en ce que la température connue (t_{c}) est la température de fusion du matériau actif.

10. Dispositif selon l'une des revendications 7 à 9, caractérisé en ce que l'émetteur (11) est un laser pulsé ou continu.

11. Dispositif selon l'une des revendications 7 à 10, caractérisé en ce que le capteur (12) est muni d'un filtre chromatique (19), adapté pour éliminer de l'onde électromagnétique réfléchie les ondes parasites ne provenant pas de l'émetteur (11) par réflexion sur la zone étalon.

12. Dispositif selon l'une des revendications 7 à 11, caractérisé en ce que les moyens de traitement des signaux (32) sont des mémoires électroniques, et les moyens de comparaison (31) sont une unité centrale de calcul.

13. Dispositif selon l'une des revendications 7 à 11, caractérisé en ce que les moyens de traitement des signaux sont une table traçante.

14. Dispositif selon l'une des revendications 7 à 13, caractérisé en ce que la zone étalon recouvre entièrement une des faces de la plaquette (18).

15. Dispositif selon l'une des revendications 7 à 14, caractérisé en ce que la zone étalon ne recouvre qu'une partie d'une des faces de la plaquette (18).

16. Plaquette étalon pour l'étalonnage d'un pyromètre optique, caractérisée en ce qu'elle présente une face active (29), une face inactive (30) et une épaisseur telle que les faces active et inactive soient sensiblement isothermes, et en ce qu'elle comporte sur une partie au moins de sa face active, une zone étalon. ayant une couche de matériau actif présentant une discontinuité de réflexion à son point de fusion.

17. Plaquette étalon selon la revendication 16, caractérisée en ce que la zone étalon est constituée d'une pluralité de matériaux déposés sous forme de couches minces.

18. Plaquette étalon selon l'une des revendications 16 à 17, caractérisée en ce que la zone étalon comprend successivement en partant de la face active vers la face inactive, une couche de matériau actif (21), une couche de séparation (22) de bonne conductivité thermique et une couche de support (23), la température de fusion du matériau actif étant inférieure à la température de fusion de la couche de séparation, elle-même inférieure à la température de fusion de la couche de support.

19. Plaquette étalon selon l'une des revendications 16 à 18, caractérisée en ce que la zone étalon est munie d'une couche de protection (24) déposée sur la couche de matériau actif (21), dont la température de fusion est supérieure à celle de ladite couche de matériau actif.

20. Plaquette étalon selon l'une des revendications 16 à 19, caractérisée en ce que le matériau actif est un corps pur cristallin.

21. Plaquette étalon selon l'une des revendications 16 à 20, caractérisée en ce que la zone étalon est constituée d'une couche de protection à base de nitrure de silicium (Si₃N₄), d'une couche de matériau actif à base de germanium (Ge), d'une couche de séparation à base d'oxyde de silicium (SiO₂) et d'une couche de support à base de silicium (Si).

22. Plaquette étalon selon l'une des revendications 16 à 21, caractérisée en ce que la zone étalon recouvre entièrement la face active de la plaquette.

23. Plaquette étalon selon l'une des revendications 16 à 21, caractérisée en ce que la zone étalon ne recouvre qu'une partie de la face active de la plaquette.

## Patentansprüche

1. Verfahren zum Eichen eines optischen Pyrometers, dadurch gekennzeichnet, daß es in den folgenden Stufen besteht:
a) Einsetzen eines mindestens an einem Teil einer seiner Oberflächen, der sogenannten aktiven Oberfläche, mit einer Standardzone versehenen Plättchens in einen Ofen, wobei die Standardzone bei einer bekannten Temperatur eine Diskontinuität der Reflexion elektromagnetischer Wellen aufweist.
b) Abstrahlen einer elektromagnetischen Welle in Richtung der Standardzone,
c) Messen und Erfassen der Intensität der durch die Standardzone reflektierten Welle,
d) Messen und Erfassen der Temperatur der Standardzone mit Hilfe des zu kalibrierenden optischen Pyrometers,
e) Aufheizen des Ofens,
f) Bestimmen des Augenblicks, in dem eine Diskontinuität der Reflexion der elektromagnetischen Welle beobachtet wird,
g) Erfassen des durch das Pyrometer in dem gleichen Augenblick gemessenen Temperaturwerts,
h) Vergleichen des besagten gemessenen Temperaturwerts mit dem bekannten Temperaturwert,
i) In Einklang bringen des durch das Pyrometer gemessenen Temperaturwerts mit dem bekannten Temperaturwert.

2. Verfahren nach Anspruch 1, dadurch gekennzeichnet, daß von einem Plättchen Gebrauch gemacht wird, dessen Standardzone aus einem während ihres Übergangs aus dem festen Zustand in den flüssigen Zustand eine Reflexionsdiskontinuität aufweisenden aktiven Material besteht, sowie dadurch, daß der bekannte Temperaturwert der Schmelzpunkt des besagten aktiven Materials ist.

3. Verfahren nach Anspruch 1 oder 2, dadurch gekennzeichnet, daß die reflektierte elektromagnetische Welle vor dem Messen ihrer Intensität einer chromatischen Filtration unterzogen wird, um die nicht durch die Reflexion der nach der Standardzone abgestrahlten elektromagnetischen Welle bedingten parasitären elektromagnetischen Wellen auszuschalten.

4. Verfahren nach einem der vorstehenden Ansprüche, dadurch gekennzeichnet, daß das zu eichende optische Pyrometer so angeordnet wird, daß es auf die der aktiven Oberfläche des Plättchens gegenüberliegende Fläche hinzielt, und zwar in einer unmittelbar unterhalb der Standardzone befindlichen Zone.

5. Verfahren nach einem der vorstehenden Ansprüche, dadurch gekennzeichnet, daß von einem Plättchen Gebrauch gemacht wird, dessen Standardzone die aktive Oberfläche völlig bedeckt.

6. Verfahren nach einem der Ansprüche 1 bis 4, dadurch gekennzeichnet, daß von einem Plättchen Gebrauch gemacht wird, dessen Standardzone nur einen Teil der aktiven Oberfläche einnimmt.

7. Anordnung zum Eichen eines optischen Pyrometers, die mit einem Ofen in Verbindung steht, um ein elektrisches Temperatursignal zu liefern, dadurch gekennzeichnet, daß es folgende Teile umfaßt:
- ein Plättchen (18) versehen mit einer Standardzone, die bei einer bekannten Temperatur (t_{c}) eine Diskontinuität der Reflexion elektromagnetischer Wellen aufweist und so beschaffen ist, daß sie sich so in den Ofen einsetzen läßt, daß ihre Standardzone auf der Zielachse des zu eichenden Pyrometers liegt,
- einen Emitter (11) für elektromagnetische Wellen, der so beschaffen ist, daß er in Richtung der Standardzone des Plättchens eine elektromagnetische Welle abstrahlt,
- einen Meßwandler (12) für elektromagnetische Wellen, der so angeordnet ist, daß er die durch die Standardzone reflektierte Strahlung empfängt und daß er ein zu der Intensität der besagten Strahlung proportionales elektrisches Signal liefert,
- Signalverarbeitungsmittel, die so angeordnet sind, daß sie die von dem Meßwandler (12) und dem zu eichenden Pyrometer (14) gelieferten elektrischen Signale empfangen, und die so beschaffen sind, daß sie den Augenblick, in welchem in dem von dem Meßwandler abgegebenen Signal eine Diskontinuität auftritt, erfassen und ein Signal, das sogenannte Eichtemperatursignal, das für das in dem gleichen Augenblick von dem Pyrometer abgegebene Temperatursignal repräsentativ ist, liefern,
- Mittel (31) zum Vergleich des Eichtemperatursignals mit dem für die bekannte Temperatur (t_{c}) repräsentativen Sollsignal, das der vorstehend genannten Reflexionsdiskontinuität entspricht, die so beschaffen sind, daß sie ein für den Unterschied zwischen diesen Signalen repräsentatives Korrektionssignal liefern,
- und Pyrometerkorrektionsmittel, die so angeordnet sind, daß sie das Korrektionssignal empfangen, und die so beschaffen sind, daß sie das besagte Signal an Pyrometereichmittel anlegen, um die Werte der Eichtemperatur und der bekannten Temperatur (t_{c}) in Einklang zu bringen.

8. Anordnung nach Anspruch 7, dadurch gekennzeichnet, daß das zu eichende Pyrometer (14) der der die Standardzone umfassenden Oberfläche entgegengesetzten Oberfläche des Plättchens gegenüber angeordnet ist, so daß es auf eine unterhalb der besagten Standardzone befindliche Zone hinzielt.

9. Anordnung nach Anspruch 7 oder 8, dadurch gekennzeichnet, daß das Plättchen eine Standardzone aus einem aktiven Material umfaßt, das bei seinem Übergang aus dem festen Zustand in den flüssigen Zustand eine Reflexionsdiskontinuität aufweist, sowie dadurch, daß die bekannte Temperatur (t_{c}) die Schmelztemperatur des aktiven Materials ist.

10. Anordnung nach einem der Ansprüche 7 bis 9, dadurch gekennzeichnet, daß der Emitter (11) ein pulsierender oder kontinuierlicher Laser ist.

11. Anordnung nach einem der Ansprüche 7 bis 10, dadurch gekennzeichnet, daß der Meßwandler (12) mit einem chromatischen Filter (19) versehen ist, das so beschaffen ist, daß es aus der reflektierten elektromagnetischen Welle, die nicht infolge von Reflexion an der Standardzone von dem Emitter (11) stammenden parisitären Wellen ausscheidet.

12. Anordnung nach einem der Ansprüche 7 bis 11, dadurch gekennzeichnet, daß die Signalverarbeitungsmittel (32) elektronische Speicher und die Vergleichmittel (31) eine Zentraleinheit sind.

13. Anordnung nach einem der Ansprüche 7 bis 11, dadurch gekennzeichnet, daß die Signalverarbeitungsmittel ein Plotter sind.

14. Anordnung nach einem der Ansprüche 7 bis 13, dadurch gekennzeichnet, daß die Standardzone eine der Oberflächen des Plättchens (18) völlig bedeckt.

15. Anordnung nach einem der Ansprüche 7 bis 14, dadurch gekennzeichnet, daß die Standardzone nur einen Teil einer der Oberflächen des Plättchens (18) bedeckt.

16. Standardplättchen zum Eichen eines optischen Pyrometers, dadurch gekennzeichnet, daß es eine aktive Oberfläche (29), eine inaktive Oberfläche (30) und eine Dicke aufweist, die so beschaffen ist, daß die aktive Oberfläche und die inaktive Oberfläche im wesentlichen isotherm sind, sowie dadurch, daß es mindestens an einem Teil seiner aktiven Oberfläche eine mit einer Schicht aktiven Materials versehene Standardzone umfaßt, wobei das besagte aktive Material an seinem Schmelzpunkt eine Reflexionsdiskontinuität aufweist.

17. Standardplättchen nach Anspruch 16, dadurch gekennzeichnet, daß sich die Standardzone aus einer Mehrzahl von in der Form dünner Schichten abgesetzten Materialien zusammensetzt.

18. Standardplättchen nach einem der Ansprüche 16 bis 17, dadurch gekennzeichnet, daß die Standardzone von der aktiven Oberfläche bis zu der inaktiven Oberfläche der Reihe nach eine Schicht aktiven Materials (21), eine Trennschicht (22) mit gutem Wärmeleitvermögen und eine Tragschicht (23) umfaßt, wobei die Schmelztemperatur des aktiven Materials niedriger ist als die Schmelztemperatur der Trennschicht, und letztere Temperatur ihrerseits niedriger ist als die Schmelztemperatur der Tragschicht.

19. Standardplättchen nach einem der Ansprüche 16 bis 18, dadurch gekennzeichnet, daß die Standardzone mit einer auf der Schicht aktiven Materials (21) abgesetzten Schutzschicht (24) versehen ist, deren Schmelztemperatur höher ist als die der besagten Schicht aktiven Materials.

20. Standardplättchen nach einem der Ansprüche 16 bis 19, dadurch gekennzeichnet, daß das aktive Material eine reine kristalline Substanz ist.

21. Standardplättchen nach einem der Ansprüche 16 bis 20, dadurch gekennzeichnet, daß die Standardzone eine auf Siliciumnitrid (Si₃N₄) beruhende Schutzschicht, eine auf Germanium (Ge) basierende Schicht aktiven Materials, eine auf Siliciumdioxid (SiO₂) basierende Trennschicht und eine auf Silicium (Si) basierende Tragschicht umfaßt.

22. Standardplättchen nach einem der Ansprüche 16 bis 21, dadurch gekennzeichnet, daß die Standardzone die aktive Oberfläche des Plättchens völlig bedeckt.

23. Standardplättchen nach einem der Ansprüche 16 bis 21, dadurch gekennzeichnet, daß die Standardzone nur einen Teil der aktiven Oberfläche des Plättchens bedeckt.

## Claims

1. Method for calibrating an optical pyrometer, characterised in that it consists in:
a) placing a wafer provided with a reference zone on at least part of one of its faces, the so-called active face, into an oven, whereby the reference zone exhibits, at a known temperature, a discontinuity as regards reflection of electromagnetic waves,
b) emitting an electromagnetic wave in the direction of the reference zone,
c) measuring and recording the intensity of the wave reflected by the reference zone,
d) measuring and recording the temperature of the reference zone with the aid of the optical pyrometer to be calibrated,
e) heating up the oven,
f) determining the instant at which a discontinuity as regards reflection of the electromagnetic wave is observed,
g) marking the temperature value measured by the pyrometer at that instant,
h) comparing said measured temperature value with the known temperature value,
i) causing the temperature value measured by the pyrometer and the known temperature value to coincide.

2. Method according to Claim 1, characterised in that use is made of a wafer, the reference zone of which comprises an active material exhibiting a discontinuity of reflection as it passes from the solid state to the liquid state, and in that the known temperature value is the melting point of said active material.

3. Method according to Claim 1 or 2, characterised in that the reflected electromagnetic wave is subjected to chromatic filtration before its intensity is measured, in order to eliminate the parasitic electromagnetic waves not originating from the reflection of the electromagnetic wave emitted towards the reference zone.

4. Method according to one of the preceding Claims, characterised in that the optical pyrometer to be calibrated is so located as to aim at the face opposite the active face of the wafer in a zone situated directly below the reference zone.

5. Method according to one of the preceding claims, characterised in that use is made of a wafer, the reference zone of which covers the active face entirely.

6. Method according to one of Claims 1 to 4, characterised in that use is made of a wafer, the reference zone of which occupies only a part of the active face.

7. Device for calibrating an optical pyrometer associated with an oven in order to supply an electrical temperature signal, characterised in that it comprises:
- a wafer (18) provided with a reference zone exhibiting a discontinuity as regards reflection of electromagnetic waves at a known temperature (t_{c}) and so designed as to be located within the oven in such a way as to ensure that its reference zone is on the collimation axis of the pyrometer to be calibrated,
- an emitter (11) of electromagnetic waves, so designed as to emit an electromagnetic wave in the direction of the reference zone of the wafer,
- a transducer (12) for electromagnetic waves arranged to receive the radiation reflected by the reference zone and so designed as to supply an electrical signal proportional to the intensity of said radiation,
- signal processing means so arranged as to receive the electrical signals emanating from the transducer (12) and from the pyrometer to be calibrated (14) and so designed as to detect the instant at which a discontinuity occurs in the signal emanating from the transducer and to supply a signal, a so called calibration temperature signal, representative of the temperature signal emanating from the pyrometer at that instant,
- means (31) for comparing the calibration temperature signal with a set signal representative of the known temperature (t_{c}) corresponding to the aforementioned reflection discontinuity, so designed as to supply a correction signal representative of the difference between said signals,
- and pyrometer correction means arranged to receive the correction signal and so designed as to apply said signal to pyrometer calibrating means in order to cause the calibration temperature value and the known temperature value (t_{c}) to coincide.

8. Device according to Claim 7, characterised in that the pyrometer (14) to be calibrated is located opposite the face of the wafer which is opposite the face comprising the reference zone, so as to aim at a zone located below said reference zone.

9. Device according to Claim 7 or 8, characterised in that the wafer comprises a reference zone constituted by an active material exhibiting a reflection discontinuity as it passes from the solid state to the liquid state and in that the known temperature (t_{c}) is the melting point of the active material.

10. Device according to one of Claims 7 to 9, characterised in that the emitter (11) is a pulsed or continuous laser.

11. Device according to one of Claims 7 to 10, characterised in that the transducer (12) is provided with a chromatic filter (19) so designed as to eliminate from the reflected electromagnetic wave the parasitic waves not originating from the emitter (11) by reflection from the reference zone.

12. Device according to one of Claims 7 to 11, characterised in that the signal processing means (32) are electronic memories and the comparing means (31) are a central processing unit.

13. Device according to one of Claims 7 to 11, characterised in that the signal processing means are a plotter.

14. Device according to one of Claims 7 to 13, characterised in that the reference zone covers one of the faces of the wafer (18) entirely.

15. Device according to one of Claims 7 to 14, characterised in that the reference zone covers only a part of one of the faces of the wafer (18).

16. Reference wafer for calibrating an optical pyrometer, characterised in that it exhibits an active face (29), an inactive face (30) and a thickness such as to ensure that the active face and the inactive face are substantially isothermal, and in that it comprises, on one part at least of its active face, a reference zone having a layer of active material exhibiting a reflection discontinuity at its melting point.

17. Reference wafer according to Claim 16, characterised in that the reference zone is constituted by a plurality of materials deposited in the form of thin layers.

18. Reference wafer according to one of Claims 16 to 17, characterised in that, from its active face towards its inactive face, the reference zone comprises in succession a layer of active material (21), a separation layer (22) of good thermal conductivity, and a support layer (23), whereby the melting point of the active material is lower than the melting point of the separation layer, which in turn is lower than the melting point of the support layer.

19. Wafer according to one of Claims 16 to 18, characterised in that the reference zone is provided with a protection layer (24) deposited on the layer of active material (21), the melting point of which is higher than that of said layer of active material.

20. Reference wafer according to one of Claims 16 to 19, characterised in that the active material is a pure crystalline substance.

21. Reference wafer according to one of Claims 16 to 20, characterised in that the reference zone comprises a protection layer based on silicon nitride (Si₃N₄), a layer of active material based on germanium (Ge), a separation layer based on silicon dioxide (SiO₂) and a support layer based on silicon (Si).

22. Reference wafer according to one of Claims 16 to 21, characterised in that the reference zone covers the active face of the wafer entirely.

23. Reference wafer according to one of Claims 16 to 21, characterised in that the reference zone covers only a part of the active face of the wafer.
